# EUROPEAN PATENT APPLICATION

(11) **EP 4 636 850 A1**
(43) Date of publication of application: **22.10.2025**
(21) Application number: 23903766.6
(22) Date of filing: 08.11.2023
(51) Int. Cl.: H01M 4/36, H01M 4/525, H01M 4/505, H01M 4/62, H01M 4/131, H01M 10/052, C01G 53/00, H01M 4/02

(54) **CATHODE ACTIVE MATERIAL FOR ALL-SOLID-STATE BATTERY, MANUFACTURING METHOD THEREFOR, AND ALL-SOLID-STATE BATTERY COMPRISING SAME**

(30) Priority: 16.12.2022 KR 20220177624
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR)
(72) Inventor: MOON, Ji Woong, Pohang-si, Gyeongsangbuk-do 37673 (KR); EUN, Tai Hee, Pohang-si, Gyeongsangbuk-do 37671 (KR); PARK, Yooncheol, Pohang-si, Gyeongsangbuk-do 37673 (KR); YUN, Jeongsik, Busan 46516 (KR); LEE, Jae Myung, Pohang-si, Gyeongsangbuk-do 37673 (KR); SONG, Jung Hoon, Gwacheon-si, Gyeonggi-do 13835 (KR); NAM, Sang Cheol, Seoul 02587 (KR)
(74) Representative: Pfenning, Meinig & Partner mbB
(86) International application number: PCT/KR2023/017904
(87) International publication number: WO 2024/128563

(57) **Abstract**

The present invention relates to a positive electrode active material for an all-solid-state battery, comprising: a core comprising a layered lithium transition metal oxide; and a coating layer disposed on the core,
wherein a ratio of the diffraction peak intensity of the (003) plane to the diffraction peak intensity of the (104) plane, I(003)/I(104), as measured by X-ray diffraction analysis, is from 1.20 to 1.40, and a molar ratio of lithium to transition metal (Li/Me) in the lithium transition metal oxide is from 1.02 to 1.05.

## Description

### [Technical Field]

The present invention relates to a positive electrode active material for an all-solid-state battery, a method for preparing the same, and an all-solid-state battery including the same, and more particularly, to a layered positive electrode active material for an all-solid-state battery, a method for preparing the same, and an all-solid-state battery including the same.

### [Background]

In recent years, as the demand for extended driving range and enhanced safety of electric vehicles has increased, the development of lithium secondary batteries with high safety and high gravimetric and volumetric energy density has become increasingly important. In particular, since the energy capacity required for electric vehicles typically reaches several tens of kilowatt-hours, damage to the battery may result in large-scale fire or explosion. As such, active research is being conducted to replace liquid electrolytes with solid electrolytes.

All-solid-state batteries, in particular, often adopt a structure in which a solid electrolyte is applied as a secondary electrolyte inside the positive electrode to form a lithium-ion conduction pathway, thereby facilitating manufacture. Among solid electrolytes, sulfide-based solid electrolytes have attracted considerable attention due to their high ionic conductivity and ease of densification under pressure.

In the positive electrode, oxide-based positive electrode active materials having a layered structure-such as NCM-based or NCA-based materials-similar to those used in lithium-ion batteries, are predominantly used in combination with sulfide-based solid electrolytes. However, these layered oxide active materials tend to react with the sulfide-based solid electrolytes at the interface, forming a high-resistance interfacial layer. To prevent such interfacial reactions, ongoing research has been focused on coating the surface of the active material with a lithium-ion-conductive oxide to improve performance.

Nevertheless, conventional lithium-ion-conductive oxide-coated active materials, although exhibiting improvements in initial capacity, efficiency, and charge/discharge cycle life compared to uncoated materials, still suffer from significant decreases in discharge capacity when the electrode loading level is increased or when the battery is operated under high-rate (high C-rate) conditions.

### [Detailed Description of the Invention]

### [Technical Problem]

Accordingly, an object of the present invention is to provide a positive electrode active material for an all-solid-state battery, which is coated with a lithium-ion-conductive oxide and exhibits improved discharge capacity under high-rate (high C-rate) conditions, as well as excellent capacity and cycle life characteristics; a method for preparing the same; and an all-solid-state battery comprising the same.

### [Solution to the Problem]

According to one embodiment of the present invention, there is provided a positive electrode active material for an all-solid-state battery, comprising:
a core comprising a layered lithium transition metal oxide; and a coating layer disposed on the core and comprising a lithium-ion-conductive oxide, wherein a ratio of the diffraction peak intensity of the (003) plane to the diffraction peak intensity of the (104) plane, I(003)/I(104), as measured by X-ray diffraction analysis, is from 1.20 to 1.40, and a molar ratio of lithium to transition metal (Li/Me) in the lithium transition metal oxide is from 1.02 to 1.05.

The positive electrode active material for an all-solid-state battery may have a full width at half maximum (FWHM) of the (110) diffraction peak in the range of 0.15 to 0.25, as measured by X-ray diffraction analysis.

The crystallite size may be from 100 nm to 120 nm.

The specific surface area may be from 0.4 m²/g to 0.7 m²/g.

The lithium transition metal oxide may be represented by the following Chemical Formula 1:

[Chemical Formula 1] Liₐ[Niₓ₁Co_{γ1}M*z*₁]O₂

wherein 1.01 ≤ a ≤ 1.05, 0.60 ≤ x₁ < 1, 0 ≤ y₁ ≤ 0.20, 0 < z₁ ≤ 0.20, and x₁ + y₁ + z₁ = 1; M is at least one selected from the group consisting of Mn, Al, Mg, Ti, Nb, W, Sc, Zr, Si, V, Fe, Y, and Mo.

The lithium-ion-conductive oxide may be represented by the following Chemical Formula 2:

[Chemical Formula 2] Liₓ₂A_{γ2}O*z*₂

wherein 0 ≤ x₂ ≤ 3, 0 < y₂ ≤ 2, and 0 < z₂ ≤ 4; A is at least one selected from the group consisting of Zr, Nb, and Ti.

The lithium-ion-conductive oxide may be Li₂ZrO₃, ZrO₂, LiNbO₃, Nb₂O₃, Li₂TiO₃, TiO₂, or a combination thereof.

The content of the coating layer may be from 0.5 wt% to 1.5 wt% based on the total weight of the positive electrode active material.

Another embodiment of the present invention provides a method for preparing a positive electrode active material for an all-solid-state battery, the method comprising:
preparing a transition metal hydroxide comprising nickel and having an average particle diameter (D50) of from 4 µm to 6 µm; forming a mixture comprising the transition metal hydroxide and a lithium precursor such that the molar ratio of lithium to transition metal (Li/Me) is from 1.02 to 1.05; calcining the mixture to form a lithium transition metal oxide; and forming a coating layer comprising a lithium-ion-conductive oxide on a surface of the lithium transition metal oxide.

In the step of forming the lithium transition metal oxide, the calcination may be performed at a temperature of from 720°C to 760°C.

In the step of preparing the transition metal hydroxide, the transition metal hydroxide may have a structure comprising thin plate-shaped primary particles.

Another embodiment of the present invention provides a positive electrode comprising the aforementioned positive electrode active material for an all-solid-state battery.

Still another embodiment of the present invention provides an all-solid-state battery comprising: a positive electrode; a negative electrode; and a solid electrolyte layer interposed between the positive electrode and the negative electrode, wherein the positive electrode includes the aforementioned positive electrode active material for an all-solid-state battery.

### [Advantages of the Invention]

According to one embodiment of the present invention, the positive electrode active material for an all-solid-state battery includes a coating layer containing a lithium-ion-conductive oxide, which suppresses the formation of a resistive interfacial layer.

In addition, by controlling characteristics such as the average particle diameter and the intensity ratio I(003)/I(104) between the (003) and (104) diffraction peaks in X-ray diffraction analysis, the output performance of the battery can be maximized.

### [Brief Description of the Drawings]

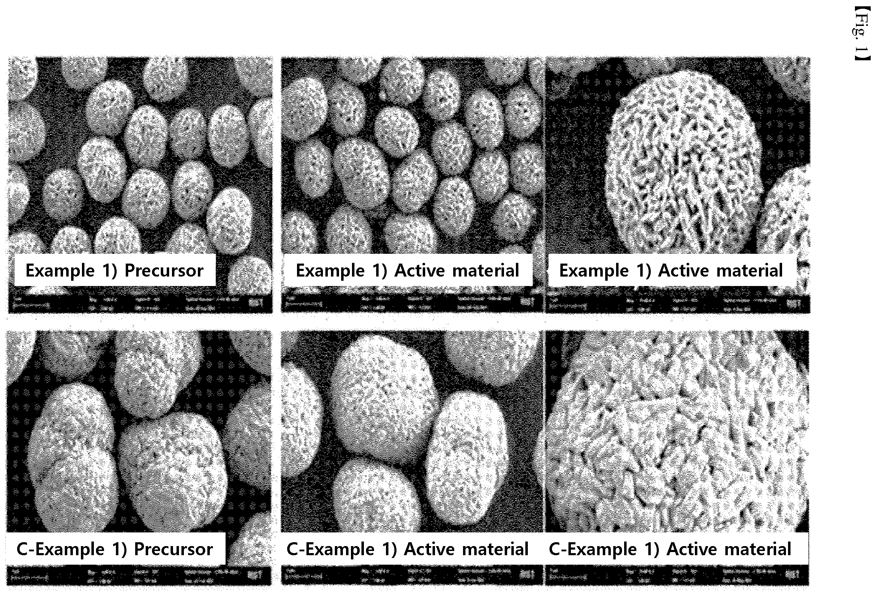

FIG. 1 is a set of SEM images of the precursor and the resulting positive electrode active material used in Example 1 and Comparative Example 1.

### [Mode for Invention]

The terms "first", "second", "third", etc., may be used herein to describe various components, elements, regions, layers, and/or sections, but are not limited thereto. These terms are merely used to distinguish one component, element, region, layer, or section from another. Therefore, a "first" component, element, region, layer, or section described below may be referred to as a "second" component, element, region, layer, or section without departing from the scope of the present invention.

The technical terms used herein are intended only to describe specific embodiments and are not intended to limit the scope of the present invention. The singular forms used herein also include plural forms unless the context clearly indicates otherwise. The term "comprising/including/containing/involving/having" used in the specification specifies the presence of stated features, integers, steps, operations, elements, and/or components, but does not preclude the presence or addition of one or more other features, integers, steps, operations, elements, components, and/or groups thereof.

When a part is referred to as being "on" or "above/over" another part, it may be directly on or above/over the other part, or intervening elements may be present therebetween. In contrast, when a part is referred to as being "directly on" or "directly above/over" another part, there are no intervening elements present.

Unless defined otherwise, all terms including technical and scientific terms used herein have the same meaning as commonly understood by one of ordinary skill in the art to which the present invention pertains. Commonly used terms defined in dictionaries should be interpreted to have a meaning consistent with their usage in the relevant technical literature and the present disclosure, and should not be interpreted in an overly idealized or strictly formal sense unless expressly so defined.

Unless otherwise specified, the symbol "%" refers to weight percent (wt%), and 1 ppm means 0.0001 wt%.

As used herein, the term "combinations thereof" in a Markush-type expression refers to any combination or mixture of one or more components selected from the group consisting of the listed components, and includes at least one component selected from the group.

Hereinafter, embodiments of the present invention will be described in detail such that one of ordinary skill in the art may readily carry out the invention. However, it should be understood that the invention may be embodied in various other forms and is not limited to the embodiments described herein.

### 1. Positive Electrode Active Material for All-Solid-State Battery

According to one embodiment of the present invention, a positive electrode active material for an all-solid-state battery includes: a core comprising a layered lithium transition metal oxide; and a coating layer disposed on the core and comprising a lithium-ion-conductive oxide, wherein a ratio of the diffraction peak intensity of the (003) plane to the diffraction peak intensity of the (104) plane, I(003)/I(104), as measured by X-ray diffraction (XRD), is from 1.20 to 1.40, and a molar ratio of lithium to transition metal (Li/Me) in the lithium transition metal oxide is from 1.02 to 1.05.

The positive electrode active material of the present embodiment may be used in an all-solid-state battery, and more specifically, in a composite cathode designed for use with a sulfide-based solid electrolyte.

The positive electrode active material comprises a core and a coating layer disposed thereon. The material may be in the form of secondary particles, in which multiple primary particles are aggregated.

As used herein, a "primary particle" refers to the smallest distinguishable particle unit as observed by scanning electron microscopy (SEM) in the cross-section of the active material. A primary particle may consist of a single grain or multiple grains.

The coating layer comprises a lithium-ion-conductive oxide. The presence of this coating suppresses undesirable interfacial reactions between the layered lithium transition metal oxide and the sulfide-based solid electrolyte, thereby improving battery capacity and cycle performance.

The lithium-ion-conductive oxide may be an oxide comprising zirconium (Zr), niobium (Nb), titanium (Ti), or combinations thereof. More specifically, it may be represented by the following Chemical Formula 2:

[Chemical Formula 2] Liₓ₂A_{γ2}Oz₂

wherein 0 ≤ x₂ ≤ 3, 0 < y₂ ≤ 2, and 0 < z₂ ≤ 4; A is Zr, Nb, Ti, or a combination thereof.

Examples of such lithium-ion-conductive oxides include, but are not limited to, Li₂ZrO₃, ZrO₂, LiNbO₃, Nb₂O₃, Li₂TiO₃, TiO₂, or combinations thereof.

Although coating the active material with a lithium-ion-conductive oxide improves initial capacity, efficiency, and cycling characteristics, it may still suffer from significant capacity loss under high-rate (high C-rate) conditions.

To overcome this, the present embodiment additionally controls the average particle diameter (D50), I(003)/I(104) peak intensity ratio, and the Li/Me molar ratio of the lithium transition metal oxide.

Specifically, the I(003)/I(104) intensity ratio may be from 1.20 to 1.40, and more preferably from 1.23 to 1.39.

In this context, "intensity" refers to the integrated peak area (rather than peak height).

The FWHM (full width at half maximum) of the (110) diffraction peak in XRD may be from 0.15 to 0.25.

The crystallite size may be from 100 nm to 120 nm.

As used herein, "crystallite" refers to a single-crystal domain with ordered atomic arrangement. The crystallite size can be measured using a high-resolution transmission electron microscope (HR-TEM), such as a TITAN G2, at a magnification of 800,000 to 2,000,000×. The average size is obtained by calculating the arithmetic mean of the measured crystallite dimensions.

When I(003)/I(104), FWHM(110), and crystallite size fall within the above ranges, interfacial contact between the active material and solid electrolyte is maximized, lithium-ion transport paths within secondary particles are minimized, and structural stability is improved. As a result, initial capacity, rate performance, and cycle life are enhanced.

The molar ratio of lithium to transition metal (Li/Me) in the lithium transition metal oxide is preferably from 1.02 to 1.05, and more specifically from 1.03 to 1.04.

Controlling the Li/Me ratio within this range allows for optimal control over I(003)/I(104), FWHM(110), and crystallite size, thereby maximizing capacity, rate, and cycle characteristics.

The average particle diameter (D50) of the positive electrode active material may be from 3 µm to 6 µm, and more specifically from 3.5 µm to 5.5 µm.

As used herein, D50 refers to the diameter at which 50% of the total particle volume is below that size, as determined from a volume-based particle size distribution curve.
D50 may be measured using laser diffraction methods, which offer high reproducibility and resolution over a size range from sub-micron to several millimeters.

When D50 is within the preferred range, contact between the active material and solid electrolyte is improved and internal lithium transport paths are shortened, resulting in enhanced capacity and rate performance.

The specific surface area of the positive electrode active material may be from 0.4 m²/g to 0.7 m²/g, and more preferably from 0.45 m²/g to 0.65 m²/g.

Specific surface area may be measured using the BET method (Micromeritics, ASAP2020 Surface Area and Porosity Analyzer).

When the specific surface area falls within the preferred range, battery performance, including cycle life, can be further improved.

The lithium transition metal oxide may be represented by the following Chemical Formula 1:

**[Chemical Formula 1]** Liₐ[Niₓ₁Co_{γ1}Mz₁]O₂

wherein 1.01 ≤ a ≤ 1.05, 0.60 ≤ x₁ < 1, 0 ≤ y₁ ≤ 0.20, 0 < z₁ ≤ 0.20, and x₁ + y₁ + z₁ = 1; M is at least one selected from the group consisting of Mn, Al, Mg, Ti, Nb, W, Sc, Zr, Si, V, Fe, Y, and Mo.

In the lithium transition metal oxide represented by Chemical Formula 1, lithium may be present in an amount corresponding to "a", specifically in the range of 1.01 ≤ a ≤ 1.05.
When "a" falls within this range, the aforementioned peak intensity ratio I(003)/I(104), the full width at half maximum (FWHM) of the (110) diffraction peak, and the average crystallite size can be effectively controlled.

In the lithium transition metal oxide of Chemical Formula 1, nickel may be present in an amount corresponding to "x₁", specifically in the range of 0.60 ≤ x₁ < 1.
When x₁ is 0.60 or higher, a sufficient amount of nickel is secured to contribute to the charge/discharge reactions, enabling high-capacity batteries.

More specifically, x₁ may range from 0.80 to less than 1.

In the lithium transition metal oxide of Chemical Formula 1, cobalt may be present in an amount corresponding to "y₁", specifically in the range of 0 ≤ y₁ ≤ 0.20.

If the cobalt content is too low, it may be difficult to simultaneously achieve sufficient rate characteristics and high tap density.

If the cobalt content is too high, the material cost increases, and the reversible capacity may decrease.

In the lithium transition metal oxide of Chemical Formula 1, the element M is an element other than lithium, nickel, and cobalt, and may be at least one selected from the group consisting of Mn, Al, Mg, Ti, Nb, W, Sc, Zr, Si, V, Fe, Y, and Mo.

M may be present in an amount corresponding to "z₁", specifically in the range of 0 < z₁ ≤ 0.20.

The content of the coating layer may be from 0.5 wt% to 1.5 wt% based on the total weight of the positive electrode active material.

If the coating content is too low, the above-described improvements in battery performance may be insufficient.

If the coating content is too high, the proportion of the lithium transition metal oxide decreases, which may lead to a reduction in the overall battery capacity.

### 2. Method for Manufacturing Positive Electrode Active Material for All-Solid-State Battery

Another embodiment of the present invention provides a method for manufacturing a positive electrode active material for an all-solid-state battery, the method comprising:
preparing a transition metal hydroxide containing nickel and having an average particle diameter (D50) ranging from 4 to 6 µm; forming a mixture comprising the transition metal hydroxide and a lithium raw material such that the molar ratio of lithium (Li) to transition metal (Me) is from 1.01 to 1.05; calcining the mixture to form a lithium transition metal oxide; and forming a coating layer containing a lithium ion conductive oxide on the surface of the lithium transition metal oxide.

Hereinafter, the method according to an embodiment of the present invention will be described in detail step by step.

First, a transition metal hydroxide containing nickel and having an average particle diameter (D50) ranging from 4 to 6 µm is prepared.

The transition metal hydroxide serves as a precursor of the positive electrode active material and may be formed of secondary particles composed of aggregated primary particles.

The precursor may have a thin plate-like morphology, which facilitates lithium-ion transport in the direction perpendicular to the plate surface.

The transition metal hydroxide may be prepared by a co-precipitation reaction of a transition metal-containing solution comprising a nickel raw material, a cobalt raw material, a manganese raw material, and optionally, doping raw materials such as Al, Mg, Ti, Nb, W, Sc, Zr, Si, V, Fe, Y, or Mo, with an ammonia solution and a caustic soda solution.

The nickel raw material may include any compound conventionally used in the preparation of precursors for positive electrode active materials, such as nickel sulfate, acetate, nitrate, halide, sulfide, hydroxide, oxide, or oxyhydroxide. Specific examples include NiSO₄, NiSO₄·6H₂O, Ni(OH)₂, NiO, NiOOH, NiCO₃·2Ni(OH)₂·4H₂O, NiC₂O₂·2H₂0, Ni(NO₃)₂·6H₂O, fatty acid nickel salts, and nickel halides.

The cobalt raw material may likewise be selected from commonly used cobalt sulfate, acetate, nitrate, halide, hydroxide, oxide, or oxyhydroxide, such as CoSO₄, CoSO₄·7H₂O, Co(OH)₂, CoOOH, Co(OCOCH₃)₂·4H₂O, Co(NO₃)₂·6H₂O, or combinations thereof.

The manganese raw material may be manganese sulfate, carbonate, nitrate, acetate, dicarboxylic acid salts, citrates, fatty acid salts, Mn₂O₃, MnO₂, Mn₃O₄, oxyhydroxides, manganese chlorides, or combinations thereof.

The transition metal-containing solution may be prepared by dissolving the raw materials in a solvent such as water or a mixed solvent of water and a water-miscible organic solvent (e.g., alcohol).

The ammonia solution may contain NH₃, NH₄OH, (NH₄)₂SO₄, NH₄NO₃, NH₄Cl, CH₃COONH₄, NH₄CO₃, or combinations thereof.

The caustic soda solution may be an aqueous solution of an alkali or alkaline earth hydroxide such as NaOH, KOH, or Ca(OH)₂, and may include a water-miscible organic solvent.

The co-precipitation may be carried out under an inert atmosphere such as nitrogen or argon.

Next, a mixture is formed by mixing the transition metal hydroxide and a lithium raw material such that the molar ratio of lithium (Li) to transition metal (Me) is from 1.02 to 1.05, more specifically from 1.03 to 1.04.

The lithium raw material may be selected from lithium sulfates, nitrates, acetates, carbonates, oxalates, citrates, halides, hydroxides, or oxyhydroxides. Specific examples include Li₂CO₃, LiNO₃, LiNO₂, LiOH, LiOH·F₂O, LiH, LiF, LiCl, LiBr, LiI, CH₃COOLi, Li₂O, Li₂SO₄, Li₃C₆H₅O₇, or combinations thereof.

The mixture may further include doping materials such as Al, Mg, Ti, Nb, W, Sc, Zr, Si, V, Fe, Y, Mo, or combinations thereof.

Then, the mixture is calcined to form a lithium transition metal oxide. The calcination may be conducted at a temperature ranging from 720°C to 760°C. The calcination may be performed for 5 to 20 hours, more preferably 5 to 15 hours, and most preferably 8 to 12 hours. The calcination may be conducted under an oxygen atmosphere.

Next, a coating layer containing a lithium ion conductive oxide is formed on the surface of the lithium transition metal oxide.

The lithium ion conductive oxide may be any of those described above.

The method of forming the coating layer is not particularly limited. For example, a coating solution containing the coating precursor may be sprayed onto the surface of the lithium transition metal oxide, followed by heat treatment and drying. Other known coating methods in the art may also be used without limitation.

### 3. All-Solid-State Battery

Another embodiment of the present invention provides a positive electrode comprising the above-described positive electrode active material for an all-solid-state battery.

More specifically, the positive electrode may include a positive electrode current collector and a positive electrode active material layer disposed on the current collector. The positive electrode active material layer may comprise the positive electrode active material for an all-solid-state battery described above, a sulfide-based solid electrolyte, and a conductive agent. The positive electrode active material layer may further include a binder.

The sulfide-based solid electrolyte may, for example, be a sulfide-based solid electrolyte having an argyrodite-type crystal structure.

The argyrodite-type sulfide solid electrolyte may be a compound represented by the formula Li₇₋ₓPS₆₋ₓDₓ (0 ≤ x ≤ 2, D is F, Cl, Br, I, or a combination thereof).

Examples include Li₆PS₃Cl, Li₆PS₅Br, and Li₆PS₅I, or combinations thereof, but are not limited thereto.

The argyrodite-type solid electrolyte may be doped with a doping element in at least part of its crystal structure, thereby improving air stability.

The conductive agent may be selected from graphite, carbon black, acetylene black, Ketjen black, channel black, furnace black, lamp black, thermal black, Tokai black, Denka black, Super P, carbon nanotubes, carbon nanofibers, graphene, fullerenes, or combinations thereof, but is not limited thereto.

The binder may be selected from polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene (PTFE), polyethylene, polypropylene, polymethacrylate, ethylene-propylene-diene monomer (EPDM) rubber, sulfonated EPDM, styrene-butadiene rubber (SBR), butadiene rubber (BR), nitrile-butadiene rubber (NBR), styrene-butadiene-styrene (SBS) block copolymer, styrene-ethylene-butadiene (SEB) block copolymer, styrene-(styrene-butadiene)-styrene block copolymer, natural rubber (NR), isoprene rubber (IR), fluoro rubber, or combinations thereof, but is not limited thereto.

The positive electrode active material layer may further include additional additives such as fillers, coating agents, dispersants, or ionic conductivity enhancers, in addition to the aforementioned components.

Another embodiment of the present invention provides an all-solid-state battery comprising: a positive electrode; a negative electrode; and a solid electrolyte layer disposed therebetween, wherein the positive electrode comprises the positive electrode active material for an all-solid-state battery as described above.

The description of the positive electrode is the same as previously described and is omitted here.

The solid electrolyte layer may comprise a sulfide-based solid electrolyte.

The sulfide-based solid electrolyte may be a compound having an argyrodite-type crystal structure, specifically represented by Li₇₋ₓPS₆₋ₓDₓ (0 ≤ x ≤ 2, where D is F, Cl, Br, I, or a combination thereof).

Examples include Li₆PS₃Cl, Li₆PS₅Br, and Li₆PS₅I, or combinations thereof, but are not limited thereto.

The argyrodite-type crystal structure solid electrolyte may be partially doped with a doping element to improve air stability.

The sulfide-based solid electrolyte used in the positive electrode active material layer and the sulfide-based solid electrolyte used in the solid electrolyte layer may be the same or different.

The solid electrolyte layer may further comprise a binder.

The binder used in the solid electrolyte layer may be selected from polyvinylidene fluoride (PVDF), PVDF-co-HFP, polyvinyl alcohol, polyacrylonitrile, CMC, starch, hydroxypropyl cellulose, regenerated cellulose, polyvinylpyrrolidone, PTFE, polyethylene, polypropylene, polymethacrylate, EPDM rubber, sulfonated EPDM, SBR, BR, NBR, SBS, SEB, styrene-(styrene-butadiene)-styrene block copolymer, natural rubber (NR), isoprene rubber (IR), fluoro rubber, or combinations thereof, but is not limited thereto.

The binder used in the solid electrolyte layer may be the same as or different from the binder used in the positive or negative electrode active material layers.

The negative electrode may include a negative electrode current collector and a negative electrode active material layer disposed thereon, and the negative electrode active material layer may include a negative electrode active material.

The negative electrode active material may include a material capable of reversible lithium-ion intercalation/deintercalation, lithium metal, a lithium metal alloy, a lithium-doping/undoping material, or a transition metal oxide.

The reversible lithium-ion intercalation/deintercalation material may be a carbonaceous material, including crystalline carbon, amorphous carbon, or mixtures thereof, commonly used in lithium-ion batteries.

Examples of crystalline carbon include natural or artificial graphite in amorphous, flake, platelet, spherical, or fibrous forms.

Examples of amorphous carbon include soft carbon (low-temperature calcined carbon), hard carbon, mesophase pitch carbon, and calcined coke.

The lithium metal alloy may be an alloy of lithium with a metal selected from Na, K, Rb, Cs, Fr, Be, Mg, Ca, Sr, Si, Sb, Pb, In, Zn, Ba, Ra, Ge, Al, and Sn.

The lithium doping/undoping material may include Si, SiOx (0 < x < 2), Si-Y alloys (Y is an element selected from alkali metals, alkaline earth metals, Group 13 elements, Group 14 elements, transition metals, rare earth elements, and combinations thereof, excluding Si), Sn, SnO₂, Sn-Y alloys (Y as defined above, excluding Sn), or mixtures of these materials with SiO₂.

The element Y may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof.

The transition metal oxide may include vanadium oxide, lithium vanadium oxide, or the like.

The negative electrode active material layer may further comprise a binder and optionally a conductive agent.

The binder binds the negative electrode active material particles together and adheres them to the current collector.

Examples of the binder include polyvinyl alcohol, CMC, hydroxypropyl cellulose, polyvinyl chloride, carboxylated PVC, polyvinyl fluoride, ethylene oxide-based polymers, polyvinylpyrrolidone, polyurethane, PTFE, polyvinylidene fluoride, polyethylene, polypropylene, styrene-butadiene rubber, acrylated styrene-butadiene rubber, epoxy resins, and nylon, but are not limited thereto.

The conductive agent imparts electrical conductivity to the electrode and may be any electronically conductive material that does not cause chemical changes in the battery.

Examples include carbonaceous materials such as natural graphite, artificial graphite, carbon black, acetylene black, Ketjen black, and carbon fibers; metallic materials such as copper, nickel, aluminum, and silver powders or fibers; conductive polymers such as polyphenylene derivatives; or mixtures thereof.

The current collector may be selected from copper foil, nickel foil, stainless steel foil, titanium foil, nickel foam, copper foam, conductive metal-coated polymer substrates, or combinations thereof.

The following provides a more detailed description of embodiments of the present invention through examples. However, the following examples are merely exemplary embodiments of the present invention and are not intended to limit the scope of the invention.

### Example 1

### (1) Preparation of Positive Electrode Active Material

(Preparation of Transition Metal Hydroxide) A transition metal hydroxide of the composition Ni_{0.83}Co_{0.12}Mn_{0.05}(OH)₂, having a plate-shaped morphology and an average particle diameter (D50) of 5 µm, was prepared.

(Formation of Lithium Transition Metal Oxide) The above transition metal hydroxide was mixed with LiOH such that the molar ratio of lithium to transition metal (Li/Me) was 1.03. The mixture was then calcined at 730°C for 10 hours under an oxygen atmosphere to form a lithium transition metal oxide represented by the formula Li_{1.03}Ni_{0.83}Co_{0.12}Mn_{0.05}O₂.

(Formation of Coating Layer) Lithium metal was dissolved in anhydrous ethanol to prepare a lithium ethoxide (Li-ethoxide) solution. A 70 wt% solution of zirconium(IV) tetrapropoxide in propanol was added to the Li-ethoxide solution and stirred for more than 10 minutes to obtain a coating solution. The prepared lithium transition metal oxide was loaded into a fluidized-bed coating apparatus, and wet coating was performed using the prepared solution with a concentration of 0.03 mol, a feed rate of 6 cc/min, and a spraying time of 60 minutes. Thereafter, the material was heat-treated at 300°C for 2 hours under an oxygen atmosphere to form a coating layer of Li₂ZrO₃ on the surface of the lithium transition metal oxide, thereby preparing the positive electrode active material.

### (2) Fabrication of All-Solid-State Battery

The resulting positive electrode active material (72 wt%), argyrodite-type solid electrolyte (Li₆PS₃Cl, 25 wt%), and conductive agent (Super C65, 3 wt%) were mixed to prepare a composite powder.

First, 100 mg of Li₆PS₃Cl solid electrolyte, functioning as a separator, was loaded into an all-solid-state battery evaluation jig and compressed at 300 MPa or more to form a pellet with a thickness of approximately 100 µm. Then, 14.4 mg of the prepared composite powder was loaded on one side of the pellet and compressed again to form the positive electrode part.

Subsequently, a Li-In alloy was loaded on the opposite side, and appropriate pressure was applied to fabricate an all-solid-state battery for evaluation.

### Example 2

A positive electrode active material and an all-solid-state battery were prepared in the same manner as in Example 1, except that the calcination temperature during the formation of the lithium transition metal oxide was 740°C.

### Comparative Example 1

A positive electrode active material and an all-solid-state battery were prepared in the same manner as in Example 1, except that the lithium to transition metal molar ratio (Li/Me) was adjusted to 1.01 during the formation of the lithium transition metal oxide.

### Comparative Example 2

A positive electrode active material and an all-solid-state battery were prepared in the same manner as in Example 1, except that the lithium to transition metal molar ratio (Li/Me) was adjusted to 1.07 during the formation of the lithium transition metal oxide.

### Comparative Example 3

A positive electrode active material and an all-solid-state battery were prepared in the same manner as in Example 1, except that a transition metal hydroxide having an average particle diameter (D50) of 6.2 µm was used.

### Comparative Example 4

A positive electrode active material and an all-solid-state battery were prepared in the same manner as in Example 1, except that a transition metal hydroxide having an average particle diameter (D50) of 6.5 µm was used.

### Experimental Example 1: SEM Image Analysis of Precursor and Positive Electrode Active Material

SEM (Scanning Electron Microscope) images of the transition metal hydroxide (precursor) used in Example 1 and Comparative Example 1, and of the positive electrode active materials prepared therefrom, are shown in FIGS. 1 to 6.

Specifically, FIGS. 1 and 4 show SEM images of the precursors used in Example 1 and Comparative Example 1, respectively.

FIGS. 2 and 3 show SEM images of the positive electrode active material prepared according to Example 1.

FIGS. 5 and 6 show SEM images of the positive electrode active material prepared according to Comparative Example 1.

### Experimental Example 2: Evaluation of Physical Properties of Positive Electrode Active Materials

The physical properties of the positive electrode active materials prepared in the Examples and Comparative Examples were evaluated, and the results are shown in Table 1 below. The specific evaluation method is described in detail below:

**[Table 1]**

| | Calcination Temperature (°C) | Li/Me Molar Ratio | Avg. Particle Diameter (D50, µm) | 1(003)/1(104) | FWHM(110) | Crystallite Size (nm) | Specific Surface Area (m²/g) |
|---|---|---|---|---|---|---|---|
| Example 1 | 730 | 1.03 | 5 | 1.36 | 0.16 | 106 | 0.65 |
| Example 2 | 740 | 1.03 | 5 | 1.39 | 0.23 | 118 | 0.56 |
| Compara tive Example 1 | 730 | 1.01 | 5 | 1.12 | 0.21 | 105 | 0.79 |
| Compara tive Example 2 | 730 | 1.07 | 5 | 1.15 | 0.20 | 106 | 0.62 |
| Compara tive Example 3 | 750 | 1.03 | 6.2 | 1.12 | 0.21 | 131 | 0.34 |
| Compara tive Example 4 | 760 | 1.03 | 6.5 | 1.06 | 0.11 | 141 | 0.30 |

### Experimental Example 3: Evaluation of Electrochemical Properties of the Lithium Secondary Battery

The electrochemical properties of the lithium secondary batteries fabricated according to the Examples and Comparative Examples were evaluated, and the results are shown in Table 2 below. The specific evaluation methods are as follows:

### Evaluation of Initial Charge/Discharge Capacity and Initial Efficiency at 0.1C

The fabricated all-solid-state battery cells for evaluation were mounted onto a charge/discharge tester, and charge/discharge characteristics were measured at 30°C. For the first cycle, charging was carried out using a constant current-constant voltage (CC-CV) method at a current density of 0.1C. The cut-off voltage for charging was set to 3.7 V, and the termination current was set to 0.02C. Discharging was carried out using a constant current method at 0.1C, with a cut-off voltage of 1.9 V. The charge capacity, discharge capacity, and initial efficiency were measured under these conditions.

### Evaluation of High-Rate Discharge Capacity at 2.0C

The discharge capacity at a high rate of 2.0C was evaluated.

### Evaluation of Cycle Retention (30 cycles at 0.5C)

Cycle retention was evaluated by measuring the ratio of the discharge capacity after 30 cycles to the initial discharge capacity at a rate of 0.5C.

**[Table 2]**

| | Initial Charge Capacity (0.1C, mAh/g) | Initial Discharge Capacity (0.1C, mAh/g) | Initial Efficiency (0.1C, %) | High-Rate Discharge Capacity (2.0C, mAh/g) | Cycle Retention (30 cycles, 0.5C, %) |
|---|---|---|---|---|---|
| Example 1 | 215.8 | 205.1 | 95.0 | 169.8 | 99.0 |
| Example 2 | 214.2 | 202.6 | 94.6 | 166.2 | 98.3 |
| Comparative Example 1 | 205 | 180.4 | 88.0 | 140.7 | 88.7 |
| Comparative Example 2 | 211.3 | 194.6 | 92.1 | 149.9 | 93.2 |
| Comparative Example 3 | 213.3 | 197.3 | 92.5 | 149.9 | 89.6 |
| Comparative Example 4 | 205.5 | 191.5 | 93.2 | 147.5 | 92.6 |

In Examples 1 and 2, where the Li/Me molar ratio, I(003)/I(104) peak intensity ratio, FWHM(110), average crystallite size, and specific surface area were all appropriately controlled, it was confirmed that the initial capacity, initial efficiency, high-rate discharge performance, and cycle retention of the battery were all significantly improved.

In contrast, in Comparative Examples 1 to 4, since either the Li/Me molar ratio during formation of the lithium transition metal oxide or the average particle size of the transition metal hydroxide was not properly adjusted, the targeted physical properties of the active material were not achieved, resulting in inferior battery performance.

While the above description has been made with reference to certain preferred embodiments of the present invention, it will be understood by those skilled in the art that various modifications, additions, and substitutions can be made without departing from the scope of the present invention. Such variations should be construed as falling within the scope of the appended claims and their equivalents.

Accordingly, the true scope of the present invention shall be defined by the attached claims and their legal equivalents.

## Claims

1. A positive electrode active material for an all-solid-state battery, comprising:
a core comprising a layered lithium transition metal oxide; and a coating layer disposed on the core and comprising a lithium-ion-conductive oxide,
wherein a ratio of the diffraction peak intensity of the (003) plane to the diffraction peak intensity of the (104) plane, I(003)/I(104), as measured by X-ray diffraction analysis, is from 1.20 to 1.40,
and a molar ratio of lithium to transition metal (Li/Me) in the lithium transition metal oxide is from 1.02 to 1.05.

2. The positive electrode active material for an all-solid-state battery of claim 1,
wherein a full width at half maximum (FWHM) of the diffraction peak of the (110) plane is from 0.15 to 0.25, as measured by X-ray diffraction analysis.

3. The positive electrode active material for an all-solid-state battery of claim 1,
wherein a crystallite size is from 100 nm to 120 nm.

4. The positive electrode active material for an all-solid-state battery of claim 1,
wherein a specific surface area is from 0.4 m²/g to 0.7 m²/g.

5. The positive electrode active material for an all-solid-state battery of claim 1,
wherein the lithium transition metal oxide is represented by the following Chemical Formula 1:
[Chemical Formula 1] Liₐ[Niₓ₁Co_{γ1}Mz₁]O₂
wherein 1.02 ≤ a ≤ 1.05, 0.60 ≤ x₁ < 1, 0 ≤ y₁ ≤ 0.20, 0 < z₁ ≤ 0.20, and x₁ + y₁ + z₁ = 1; M is at least one selected from the group consisting of Mn, Al, Mg, Ti, Nb, W, Sc, Zr, Si, V, Fe, Y, and Mo.

6. The positive electrode active material for an all-solid-state battery of claim 1, wherein the lithium-ion-conductive oxide is represented by the following Chemical Formula 2:
[Chemical Formula 2] Liₓ₂A_{γ2}Oz₂
wherein 0 ≤ x₂ ≤ 3, 0 < y₂ ≤ 2, and 0 < z₂ ≤ 4;
A is at least one selected from the group consisting of Zr, Nb, and Ti.

7. The positive electrode active material for an all-solid-state battery of claim 1, wherein the lithium-ion-conductive oxide is Li₂ZrO₃, ZrO₂, LiNbO₃, Nb₂O₃, Li₂TiO₃, TiO₂, or a combination thereof.

8. The positive electrode active material for an all-solid-state battery of claim 1,
wherein a content of the coating layer is from 0.5 wt% to 1.5 wt% based on a total weight of the positive electrode active material.

9. A method for preparing a positive electrode active material for an all-solid-state battery, comprising:
preparing a transition metal hydroxide comprising nickel and having an average particle diameter (D50) of from 4 µm to 6 µm;
forming a mixture comprising the transition metal hydroxide and a lithium precursor such that a molar ratio of lithium to transition metal (Li/Me) is from 1.02 to 1.05;
calcining the mixture to form a lithium transition metal oxide; and
forming a coating layer comprising a lithium-ion-conductive oxide on a surface of the lithium transition metal oxide.

10. The method of claim 9,
wherein the calcining is performed at a temperature of from 720°C to 760°C.

11. The method of claim 9,
wherein the transition metal hydroxide comprises a structure including thin plate-shaped primary particles.

12. A positive electrode comprising the positive electrode active material for an all-solid-state battery according to any one of claims 1 to 8.

13. An all-solid-state battery comprising:
a positive electrode;
a negative electrode; and
a solid electrolyte layer interposed between the positive electrode and the negative electrode,
wherein the positive electrode comprises the positive electrode active material for an all-solid-state battery according to any one of claims 1 to 8.
